# EUROPÄISCHE PATENTSCHRIFT

(11) **EP 3 131 382 B1**
(45) Veröffentlichungstag und Bekanntmachung des Hinweises auf die Patenterteilung: **14.11.2018**
(21) Anmeldenummer: 15715733.0
(22) Anmeldetag: 13.04.2015
(51) Int. Cl.: A01D 34/30, F16H 21/44

(54) **MÄHMESSERANTRIEB**
MOWING CUTTER DRIVE
ENTRAÎNEMENT DE LAME DE FAUCHEUSE

(30) Priorität: 16.04.2014 DE 102014105457
(43) Veröffentlichungstag der Anmeldung: 22.02.2017
(73) Patentinhaber: EWM Eichelhardter Werkzeug- und Maschinenbau GmbH, 57612 Eichelhardt (DE)
(72) Erfinder: SCHUMACHER, Heinrich, Günter, 57612 Eichelhardt (DE); SCHMIDT, Ralf, 57629 Mörsbach (DE)
(74) Vertreter: Neumann Müller Oberwalleney & Partner Patentanwälte
(86) Internationale Anmeldenummer: PCT/EP2015/057978
(87) Internationale Veröffentlichungsnummer: WO 2015/158660

(56) Entgegenhaltungen:
- EP-A1- 2 182 249
- DE-A1- 19 542 550
- DE-A1-102010 040 870
- DE-B4-102009 040 230
- JP-A- H05 118 401

## Beschreibung

Die Erfindung betrifft einen Antrieb mit zwei identischen Getriebeanordnungen mit jeweils einem ersten Getriebe und einem zweiten Getriebe. Jedes der Getriebe weist zumindest ein Übertragungselement zur Übertragung einer geradlinigen translatorischen Hin- und Herbewegung eines Antriebsgelenkpunktes in einer Antriebsrichtung in eine geradlinige translatorische Hin- und Herbewegung eines Abtriebsgelenkpunktes in einer von der Antriebsrichtung abweichenden Abtriebsrichtung (Q) auf. Je Getriebeanordnung ist ein Abtriebselement vorgesehen, das mit den Abtriebsgelenkpunkten beider Getriebe der jeweiligen Getriebeanordnung verbunden ist und diese in einem festen Abstand zueinander koppelt. Es ist ein gemeinsames Antriebselement vorgesehen, das mit Antriebsgelenkpunkten von Getrieben beider Getriebeanordnungen verbunden ist und diese in einem festen Abstand zueinander koppelt. Ferner sind die Getriebeanordnungen spiegelsymmetrisch zueinander angeordnet, so dass die Abtriebselemente der beiden Getriebeanordnungen auf einer gemeinsamen Abtriebsachse gegenläufig zueinander angetrieben sind.

Bekannte Mähmesserantriebe werden durch unterschiedlichster Bauart realisiert. Bewährt haben sich insbesondere für Mähmesser für große Mähbreiten, teilweise mit Breiten von bis zu 18 Metern, d.h. dort wo hohe Leistungen gefordert werden, solche Antriebseinheiten, die eine Getriebeeinheit umfassen, welche eine Drehbewegung unmittelbar in eine hin und her gehende Bewegung umwandeln und unmittelbar mit dem Messerkopf des Mähmessers in Wirkverbindung stehen, um dieses oszillierend anzutreiben.

Die US 6 273 214 B1 zeigt eine Winkelgetriebeanordnung zum Antrieb eines Mähmessers. Hierbei ist eine erste Getriebeeinheit vorgesehen, die eine rotatorische Bewegung in eine translatorische Bewegung zum Antreiben des Mähmessers umwandelt. Ferner ist eine zweite Getriebeeinheit in Form eines Winkelgetriebes vorgesehen. Die zweite Getriebeeinheit dient der Drehrichtungsänderung, da die Antriebseinheit von einem entfernt angeordneten Motor über einen Riementrieb und eine Riemenscheibe angetrieben wird. Hierbei muss die Rotation der Riemenscheibe, die sich um eine horizontale Achse dreht, umgelenkt werden in eine Rotationsbewegung um eine vertikale Achse. Hierzu dient die zweite Getriebeeinheit in Form des Winkelgetriebes.

Eine Getriebeeinheit zum Antreiben eines Mähmessers ist ferner in der DE 36 15 058 C2 beschrieben und weist ein Gehäuse auf, welches eine erste Achse bildet. Die Getriebeeinheit umfasst einen in dem Gehäuse um die erste Achse drehbar gelagerten Rotor, der von einem Antriebsaggregat angetrieben wird. In dem Gehäuse ist ein innen verzahntes Hohlzahnrad stationär befestigt, d.h. dieses rotiert gegenüber dem Gehäuse nicht. Der Rotor ist in Lagern im Gehäuse gehalten. An dem Rotor selbst ist wiederum um eine zweite Achse ein Zahnritzel drehbar gelagert. Die zweite Achse ist radial zur ersten Achse versetzt. Das Zahnritzel bildet das Abtriebsglied des Getriebes und ist mit dem Hohlzahnrad in Eingriff.

In der Praxis wird eine solche Getriebeeinheit beispielsweise durch einen Riementrieb von einem Antriebsmotor aus angetrieben. Zusätzlich wird häufig eine Schwungmasse vorgesehen, um auch plötzlich auftretende Belastungen bewältigen zu können. Ferner kommen Hydraulikmotoren für den Antrieb zum Einsatz. Solche Antriebseinheiten benötigen jedoch einen erheblichen Platzbedarf. Da diese Antriebseinheiten seitlich des Mähmessers, d.h. in deren axialen Verlängerung der Bewegungsrichtung des Mähmessers, angeordnet ist, wird hierdurch die maximale Mähbreite reduziert. Zudem liegen die Antriebe außen an den Enden der Mähmesser, so dass besondere Vorkehrungen getroffen werden müssen, um die hohen Gewichte der Antriebe außen abzustützen.

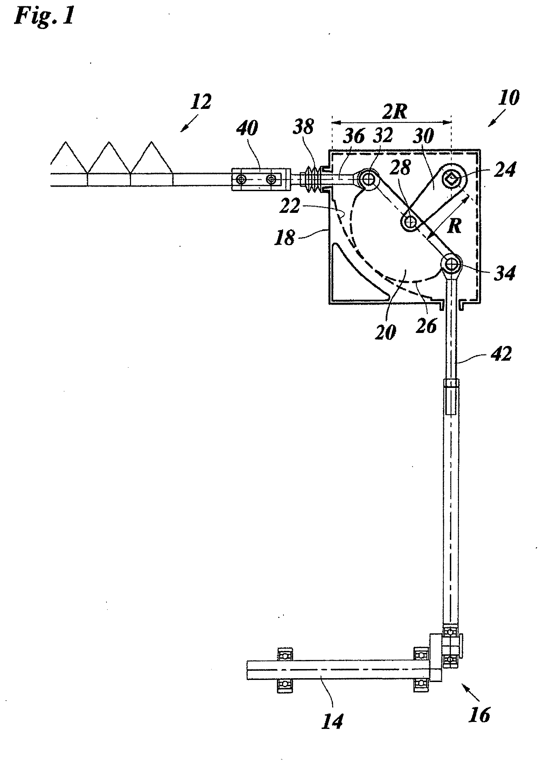

Ein Antrieb für eine Schneidvorrichtung ist in der DE 10 2009 040 230 B4 gezeigt, bei dem ein Schneidmesser von einem Getriebe, wie dies in Figur 1 dargestellt ist, angetrieben wird. Die in Figur 1 schematisch dargestellte Schneidvorrichtung für eine Landmaschine hat ein Getriebe 10, über das ein Schneidmesser 12 angetrieben wird. Das Schneidmesser 12 ist in Figur 1 der Übersichtlichkeit halber lediglich teilweise dargestellt. Bei dem Schneidmesser 12 kann es sich beispielsweise um ein Mähmesser einer Erntemaschine, wie z.B. eines Mähdreschers, handeln. Das Getriebe 10 ist vorzugsweise stationär an einem Messerbalken, an dem das Mähmesser geführt ist, angebracht.

In Figur 1 ist schematisch eine Vorgelegewelle 14 dargestellt, über die mittels eines Kurbeltriebs 16 und das Getriebe 10 das Schneidemesser 12 angetrieben wird. Die Vorgelegewelle 14 verläuft quer zur Fahrtrichtung der Landmaschine und ist drehend angetrieben.

Das Getriebe 10 hat ein Gehäuse 18, von dem in Figur 1 eine Halbschale schematisch dargestellt ist. In dem Gehäuse 18 ist eine Wippe 20 aufgenommen, die eine Wippbewegung in einer der Zeichenebene entsprechenden Ebene ausführen kann. An einer Innenseite an der Wand des Gehäuses 18 bildet das Gehäuse eine konkave Führungskontur 22, die entlang eines Kreisbogens um einen getriebefesten Punkt 24 verläuft und im gezeigten Beispiel annähernd einem Viertelkreis entspricht.

Die Wippe 20 hat eine konvexe, kreisbogenförmige Außenkontur 26, die um einen Führungspunkt 28 der Wippe verläuft. Die Außenkontur 26 entspricht zumindest annähernd einem Halbkreis. Dabei hat die Außenkontur 26 einen Radius R, und die Führungskontur 22 einen Radius von 2R. Die Außenkontur 26 und die Führungskontur 22 sind jeweils mit Zähnen versehen, die ineinandergreifen. Somit ist die Wippe 20 mit der Führungskontur 22 verzahnt und ist somit dazu gezwungen, auf der Führungskontur 22 abzurollen.

Um ein Abheben der Wippe 20 von der Führungskontur 22 zu verhindern, ist die Wippe an dem Führungspunkt 28 gelenkig mit einem Lenker 30 verbunden, der wiederum an dem getriebefesten Punkt 24 gelenkig mit dem Gehäuse 18 verbunden ist. Der Abstand zwischen dem getriebefesten Punkt 24 und dem Führungspunkt 28 beträgt annähernd R. Es wird somit eine Zwangsführung des Führungspunktes 28 auf einem Kreisbogen mit dem Radius R um den getriebefesten Punkt 24 bewirkt. Alternativ kann der Lenker 30 durch eine Rolle ersetzt sein, die um den Führungspunkt drehbar gelagert ist und auf einer konvexen Führungskulisse um den getriebefesten Punkt 24 abrollt.

Beim Abrollen der Wippe 20 auf der Führungskontur 22 (Wippbewegung) führen ein Antriebsgelenkpunkt 34 und ein Abtriebsgelenkpunkt 32 der Wippe 20, die im Abstand von annähernd R vom Führungspunkt 28 angeordnet sind, geradlinige Hin- und Herbewegungen in Richtung auf den getriebefesten Punkt 24 und von diesem weg aus. Der Lenker 30 und die Verzahnung erzwingen die Gradführung der Gelenkpunkte 32, 34.

An dem Abtriebsgelenkpunkt 32 ist ein Abtriebselement 36 in Form einer Stange gelenkig mit der Wippe 20 verbunden. Das Abtriebselement 36 ist beispielsweise aus dem Gehäuse 18 in gerader Linie lose herausgeführt und über einen Faltenbalg 38 abgedichtet. Das Abtriebselement 36 ist beispielsweise über eine Halterung 40 gelenkig und/oder einen Fluchtausgleich gestattend mit dem Schneidmesser 12 verbunden, wobei die Längsrichtung des Schneidmessers 12 parallel zur Richtung der Hin- und Herbewegung des Abtriebsgelenkpunktes 32 ist. Durch die gelenkige und/oder einen Fluchtausgleich gestattende Verbindung an der Halterung 40 können kleine Fluchtfehler zwischen dem im Messerbalken mehrfach gerade geführten Schneidmesser 12 und dem im Getriebe gerade geführten Punkt 32 ausgeglichen werden. Im in Figur 1 gezeigten Beispiel ist das Schneidmesser 12 in Verlängerung des Abtriebselements 36 angeordnet.

Am Antriebsgelenkpunkt 34 ist ein Antriebselement 42 in Form einer Pleuelstange des Kurbeltriebs 16 über ein Kugelgelenk gelenkig mit der Wippe 20 verbunden. Das Antriebselement 42 ist lose aus dem Gehäuse 18 herausgeführt. Das andere Ende des Antriebselements 42 folgt am Kurbeltrieb einer Kreisbahn. Die lose, gelenkige Verbindung mit der Wippe 20 erlaubt ein Hin- und Herpendeln des Antriebselements 42.

Wenn die Vorgelegewelle 14 umlaufend angetrieben wird, versetzt der Kurbeltrieb 16 über die Pleuelstange oder das Antriebselement 42 den zweiten Gelenkpunkt 34 in eine geradlinige Hin- und Herbewegung. Diese wird über die zwangsgeführte Wippe 20 um 90° umgelenkt und auf das Abtriebselement 36 und somit auf das Schneidmesser 12 übertragen. Im gezeigten Beispiel beträgt der Winkel zwischen den beiden Bewegungsrichtungen 90°. Da die geradlinige Bewegung der Gelenkpunkte 32, 34 bereits durch die Zwangsführung der Wippbewegung vorgegeben ist, ist keine Führung der Antriebs- und Abtriebselemente 42, 36 am Gehäuse 18 erforderlich. Aufgrund der Zwangsführung der Wippe treten an der Abtriebsseite keine Querkräfte auf, so dass eine exakte, verschleißminimierte Geradführung des Schneidmessers 12 im Messerbalken ermöglicht wird. Eine Querdrehung der Wippe 20 aus der Zeichenebene in Figur 1 heraus wird beispielsweise durch eine flächige Führung, beispielsweise eine flächige, geschmierte Gleit- oder Rollführung der Wippe 20 an einer Grundfläche des Gehäuses 18 verhindert.

DE 10 2009 040 230 B4 beschreibt ferner, dass zwei gegenläufig angetriebene Schneidmesser von zwei solcher Getriebe mittig angetrieben werden.

JP 2002-156015 A beschreibt einen Antrieb für einen Schaftrahmen einer Webmaschine, bei dem die Antriebsbewegung eines Linearmotors über Hebel in eine Hin- und Herbewegung des Schaftrahmens transformiert wird, wobei der Schaftrahmen über Gelenkpunkte mit schwenkend angetriebenen Hebeln verbunden ist.

Aufgabe der vorliegenden Erfindung ist es, einen Mähmesserantrieb bereitzustellen, der mit wenigen Linearführungselementen eine translatorische Bewegung des Abtriebselements ermöglicht.

Gelöst wird die Aufgabe durch einen Antrieb mit zwei identischen Getriebeanordnungen mit jeweils einem ersten Getriebe und einem zweiten Getriebe. Jedes der Getriebe weist zumindest ein Übertragungselement zur Übertragung einer geradlinigen translatorischen Hin- und Herbewegung eines Antriebsgelenkpunktes in einer Antriebsrichtung in eine geradlinige translatorische Hin- und Herbewegung eines Abtriebsgelenkpunktes in einer von der Antriebsrichtung abweichenden Abtriebsrichtung (Q) auf. Je Getriebeanordnung ist ein Abtriebselement vorgesehen, das mit den Abtriebsgelenkpunkten beider Getriebe der jeweiligen Getriebeanordnung verbunden ist und diese in einem festen Abstand zueinander koppelt. Es ist ein gemeinsames Antriebselement vorgesehen, das mit Antriebsgelenkpunkten von Getrieben beider Getriebeanordnungen verbunden ist und diese in einem festen Abstand zueinander koppelt. Ferner sind die Getriebeanordnungen spiegelsymmetrisch zueinander angeordnet, so dass die Abtriebselemente der beiden Getriebeanordnungen auf einer gemeinsamen Abtriebsachse gegenläufig zueinander angetrieben sind. Das Antriebselement ist zum Antreiben der Antriebsgelenkpunkte beider Getriebe jeder Getriebeanordnung vorgesehen, wobei das Antriebselement mit den Antriebsgelenkpunkten beider Getriebe jeder Getriebeanordnung verbunden ist und diese in einem festen Abstand zueinander koppelt.

Im Unterschied zum Stand der Technik sind somit alle Antriebsgelenkpunkte aller Getriebe über das Antriebselement in einem festen Abstand zueinander gekoppelt und alle Abtriebsgelenkpunkte aller Getriebe über das Abtriebselement in einem festen Abstand zueinander gekoppelt. Somit ergibt sich eine Art Parallelogrammanordnung mit festen Bezugspunkten zueinander. Da beide Übertragungselemente vom Antriebselement angetrieben werden, wird das Abtriebselement zwischen den beiden Abtriebsgelenkpunkten nicht auf Zug oder Druck beansprucht. Das Abtriebselement muss daher nicht hinsichtlich der Antriebsleistung dimensioniert werden. Darüber hinaus ist das Abtriebselement geradlinig translatorisch bewegt und kann unmittelbar mit einem Schneidmesser verbunden werden, dass geradlinig angetrieben werden soll. Alternativ kann das Schneidmesser selbst das Abtriebselement bilden. Da zwei Getriebeanordnungen vorgesehen sind, können zwei Schneidmesser gegenläufig zueinander angetrieben werden.

Vorzugsweise ist vorgesehen, dass der Antriebsgelenkpunkt eines Getriebes mit einer ersten Getriebeanordnung der genannten zwei Getriebeanordnungen identisch ist mit einem Antriebsgelenkpunkt eines Getriebes einer zweiten Getriebeanordnung der genannten zweiten Getriebeanordnung. Somit wird eine kompakte Bauweise ermöglicht.

Die beiden Getriebeanordnungen können in einem gemeinsamen Gehäuse aufgenommen sein, so dass sich eine kompakte Baueinheit für den Antrieb ergibt, die für den Antrieb zweier gegenläufig anzutreibenden Schneidmesser eines Mähwerks einsetzbar ist.

Vorzugsweise ist das zumindest eine Übertragungselement mindestens eines der beiden Getriebe derart zwangsgeführt, dass die geradlinige translatorische Hin- und Herbewegung des Antriebsgelenkpunktes in der Antriebsrichtung in die geradlinige translatorische Hin- und Herbewegung des Abtriebsgelenkpunktes in der Abtriebsrichtung umgesetzt wird. Vorzugsweise ist das zumindest eine Übertragungselement beider Getriebe derart zwangsgeführt. Durch die Zwangsführung des zumindest einen Übertragungselementes müssen das Antriebselement und das Abtriebselement nicht zwangsgeführt werden. Die Führung des Antriebselements und des Abtriebselements ergibt sich automatisch durch die Zwangsführung der Übertragungselemente. Somit sind keine weiteren Führungselemente oder ähnliches erforderlich. Für eine genauere Linearführung des Antriebselements und/oder des Abtriebselements können diese jedoch auch separat geführt werden, zum Beispiel gegenüber einem Gehäuse des Antriebs.

Das Antriebselement kann unterschiedlich gestaltet und unterschiedlich angetrieben sein. Vorzugsweise ist das Antriebselement mit zumindest einem Mitnehmer verbunden, der über eine Kurvenscheibe angetrieben ist. Die Kurvenscheibe kann hierbei um eine Drehachse drehend angetrieben sein, wobei die Kurvenscheibe eine um die Drehachse verlaufende Führungsbahn aufweist. Der zumindest eine Mitnehmer des Antriebselements ist an der Führungsbahn geführt. Die Führungsbahn weist über ihren Umfang betrachtet einen veränderlichen Abstand zur Drehachse auf, so dass der Mitnehmer translatorisch hin und her bewegt wird, vorzugsweise radial zur Drehachse. Die Führungsbahn kann beliebig gestaltet sein, so dass die translatorische Bewegung des Abtriebselements angepasst werden kann. Zum Beispiel kann die Führungsbahn derart gestaltet sein, dass bei der Drehrichtungsumkehr eine geringe Geschwindigkeit des Abtriebselements erzielt wird, so dass die Schwingungen des Antriebs reduziert werden. Ferner hat sich gezeigt, dass bei einer sinusförmigen Bewegung des Antriebselements über der Zeit unterschiedliche Geschwindigkeiten an den beiden Drehrichtungsumkehrpunkten des Abtriebselements ergeben. Diese Bewegung kann durch eine entsprechende Gestaltung der Führungsbahn symmetrisch gestaltet werden.

Bei einer bevorzugten Ausführungsform ist vorgesehen, dass zumindest eines, vorzugsweise beide, der Getriebe eine Wippe als Übertragungselement aufweist, die dazu eingerichtet ist, eine begrenzte Wippbewegung auszuführen, wobei die Wippe derart zwangsgeführt ist, dass bei der Wippbewegung ein Führungspunkt der Wippe einen konstanten Abstand von einem getriebefesten Punkt einhält. Die Wippe weist hierbei den Antriebsgelenkpunkt und den Abtriebsgelenkpunkt auf.

Für eines, vorzugsweise beide, der Getriebe kann vorgesehen sein, dass die Wippe mittels eines Lenkers zwangsgeführt ist, wobei der Lenker um den Führungspunkt schwenkbar ist und um eine durch den getriebefesten Punkt verlaufende Schwenkachse schwenkbar ist.

Darüber hinaus kann für eines, vorzugsweise beide, der Getriebe vorgesehen sein, dass die Wippe eine kreisabschnittsförmige Außenkontur mit einem Radius R aufweist, wobei das Getriebe weiter eine konkave Führungskontur aufweist, die kreisabschnittsförmig mit einem Radius gestaltet ist, der annähernd doppelt so groß ist wie der Radius R der Außenkontur der Wippe, und die Außenkontur mit der konkaven Führungskontur in abrollendem Kontakt steht.

Es kann vorgesehen sein, dass die Wippen beider Getriebe mit einem Lenker zwangsgeführt sind. In diesem Fall sind kreisabschnittsförmige Außenkonturen und konkave Führungskonturen nicht zwingend erforderlich.

Die Außenkonturen der Wippen und die Führungskonturen können jeweils Zähne aufweisen, die ineinander greifen.

Grundsätzlich können demnach die Getriebe ausgebildet sein, wie das Getriebe gemäß der DE 10 2009 040 230 B4.

Die Aufgabe wird ferner durch einen Schneidmesserantrieb mit einem oben beschriebenen Antrieb gelöst, wobei das Abtriebselement Verbindungsmittel aufweist, über die das Abtriebselement unter einem Schneidmesser verbindbar ist.

Darüber hinaus wird die Aufgabe durch ein Mähwerk einer landwirtschaftlichen Maschine mit einem oben beschriebenen Antrieb gelöst, wobei das Abtriebselement eines Getriebes einer ersten Getriebeanordnung der genannten zwei Getriebeanordnungen mit einem ersten Mähmesser verbunden ist, und wobei das Abtriebselement eines Getriebes einer zweiten Getriebeanordnung der genannten zwei Getriebeanordnungen mit einem zweiten Mähmesser verbunden ist.

Hierdurch ergibt sich ein kompakter Antrieb für zwei gegenläufig angetriebene Mähmesser, wobei der Antrieb in der Mitte zwischen den beiden Mähmessern angebunden ist und somit platzsparend ist. Der Antrieb befindet sich vorzugsweise in Fahrtrichtung betrachtet hinter den Mähmessern, so dass bezogen auf die Breite des Mähwerks kein Platzbedarf besteht, sondern die gesamte Breite des Mähwerks für die Mähmesser zur Verfügung steht. Zudem handelt es sich bei dem beschriebenen Antrieb um eine sehr flache Bauform, die platzsparend hinter dem Mähwerk angeordnet werden kann.

Ein bevorzugtes Ausführungsbeispiel der vorliegenden Erfindung wird anhand der Figuren näher erläutert. Hierin zeigt
- Figur 1: einen Antrieb mit einem Getriebe nach dem Stand der Technik, wobei das Getriebe in einem erfindungsgemäßen Antrieb Anwendung finden kann;
- Figur 2: eine Draufsicht auf einen erfindungsgemäßen Antrieb in einer ersten Stellung, und
- Figur 3: einen Antrieb gemäß Figur 2 in einer zweiten Stellung.

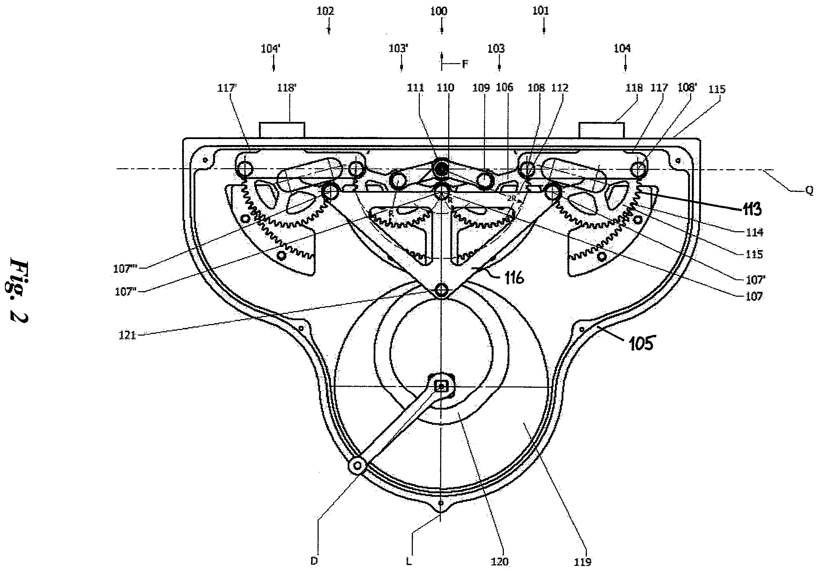

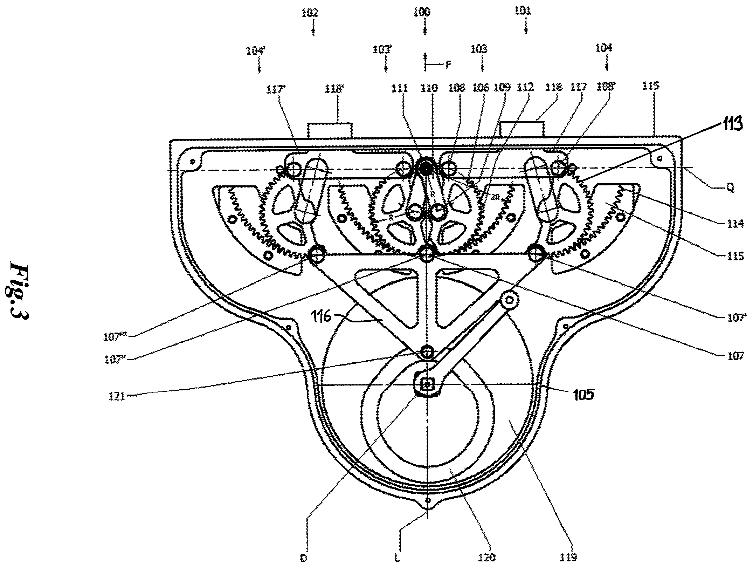

Die Figuren 2 und 3 zeigen einen erfindungsgemäßen Antrieb für Mähmesser eines Mähwerks einer landwirtschaftlichen Maschine in unterschiedlichen Stellungen und werden im folgenden zusammen beschrieben.

Die Figuren 2 und 3 zeigen einen Antrieb 100 mit einer ersten Getriebeanordnung 101 und einer zweiten Getriebeanordnung 102, die beide in einem gemeinsamen Gehäuse 105 aufgenommen sind. Die beiden Getriebeanordnungen 101, 102 sind zu einer Längsachse L spiegelsymmetrisch ausgebildet. Die Längsachse L ist hierbei in Fahrrichtung F der landwirtschaftlichen Maschine ausgerichtet. Durch die Anordnung der Getriebeanordnungen 101, 102 in einem gemeinsamen Gehäuse 105 kann der Antrieb als Baueinheit in einer landwirtschaftlichen Maschine eingebaut werden und dient als Antrieb in einem Mähwerk mit zwei gegenläufig angetriebene Mähmesser. Der Antrieb ist in der Mitte des Mähwerks angeordnet. Da in diesem Bereich in der Regel bei Erntemaschinen der Gutfluss stattfindet, also das Erntegut vom Mähwerk zu nachgelagerten Einheiten, wie zum Beispiel einem Häcksler, geführt wird, liegen in diesem Bereich sehr beengte Bauräume vor. Insbesondere ist der Bauraum in der Höhe deutlich eingeschränkt. Durch den erfindungsgemäßen Antrieb wird ein flachbauender Antrieb bereitgestellt, über dem der Gutfluss stattfinden kann.

Die Bauteile der einzelnen Getriebeanordnungen 101, 102 sind im Folgenden mit denselben indizierten Bezugszeichen versehen. Repräsentativ für beide Getriebeanordnungen wird die rechts dargestellte Getriebeanordnung 101 im Folgenden näher erläutert.

Die erste Getriebeanordnung 101 weist ein erstes Getriebe 103 und ein zweites Getriebe 104 auf, die bezüglich ihrer Funktion und ihres Aufbaus identisch aufgebaut sind. Das erste Getriebe 103 weist ein Übertragungselement in Form einer Wippe 106 auf. Die Wippe 106 weist einen Antriebsgelenkpunkt 107 und einen Abtriebsgelenkpunkt 108 auf. Über den Antriebsgelenkpunkt 107 ist die Wippe 106 mit einem Antriebselement 116 verbunden. Über den Abtriebsgelenkpunkt 108 ist die Wippe 106 mit einem Abtriebselement 117 verbunden. Die Wippe 106 weist ferner einen Führungspunkt 109 auf, der in Form eines Bolzengelenks dargestellt ist. An dem Führungspunkt 109 ist die Wippe 106 mit einem Lenker 110 verbunden, der schwenkbar um den Führungspunkt 109 mit der Wippe 106 verbunden ist. Ferner ist der Lenker 110 schwenkbar um einen getriebefesten Punkt 111 am Gehäuse 105 schwenkbar befestigt. Somit ist gewährleistet, dass die Wippe 106 Wippbewegungen ausführen kann, wobei der Führungspunkt 109 einen festen Abstand zum getriebefesten Punkt 111 aufweist.

Die Wippe 106 weist darüber hinaus eine kreisabschnittsförmige Außenkontur 112 auf, die mit einer Außenverzahnung 113 versehen ist. Die Außenkontur 112 ist zentrisch zum Führungspunkt 109 angeordnet und weist einen Radius R auf. Darüber hinaus entspricht auch der Abstand zwischen dem Führungspunkt 109 und dem getriebefesten Punkt 111 dem Radius R. Das erste Getriebe 102 weist ferner eine konkave Führungskontur 114 mit einer Innenverzahnung 115 auf, wobei die Außenverzahnung 113 der Wippe 106 in Verzahnungseingriff zur Innenverzahnung 115 steht. Die Innenverzahnung 115 ist zentrisch um den getriebefesten Punkt 111 angeordnet und weist einen Radius von 2R auf. Der Radius der Innenverzahnung 115 ist somit doppelt so groß wie der Radius der Außenverzahnung 113.

Durch diese Zwangsführung der Wippe 106 ist gewährleistet, dass eine geradlinige translatorische Bewegung des Antriebsgelenkpunktes 107 in eine Antriebsrichtung entlang der Längsachse L in eine geradlinige translatorische Bewegung des Abtriebsgelenkpunktes 108 in einer Abtriebsrichtung entlang einer Querachse Q, welche senkrecht zur Längsachse L angeordnet ist, umgewandelt wird.

Grundsätzlich ist das erste Getriebe 103 somit aufgebaut, wie das Getriebe gemäß dem Stand der Technik in Figur 1.

Das zweite Getriebe 104 der ersten Getriebeanordnung 101 ist funktional identisch zum ersten Getriebe 103 aufgebaut. Übereinstimmende Bauteile sind mit denselben indizierten Bezugszeichen versehen, wobei auf die Beschreibung zum ersten Getriebe 103 verwiesen wird. Das Antriebselement 116 ist sowohl mit dem Antriebsgelenkpunkt 107 des ersten Getriebes 103 als auch mit dem Antriebsgelenkpunkt 107' des zweiten Getriebes 104 verbunden. Darüber hinaus ist das Abtriebselement 117 sowohl mit dem Abtriebsgelenkpunkt 108 des ersten Getriebes 103 als auch mit dem Abtriebsgelenkpunkt 108' des zweiten Getriebes 104 verbunden. Es ergibt sich somit eine Parallelogrammanordnung, welche durch das Antriebselement 116, die beiden Wippen 106, 106' des ersten Getriebes 103 und des zweiten Getriebes 104, sowie dem Abtriebselement 117 gebildet ist. Durch die Zwangsführung der Wippen 106, 106' sind das Antriebselement 116 und das Abtriebselement 117 zwangsgeführt, das Antriebselement 116 entlang der Längsachse L und das Abtriebselement 117 entlang der Querachse Q.

Die zweite Getriebeanordnung 102 ist, wie oben bereits erwähnt, spiegelsymmetrisch zur ersten Getriebeanordnung 101 ausgebildet. Hierbei liegen der Antriebsgelenkpunkt 107 des ersten Getriebes 103 der ersten Getriebeanordnung 101 auf dem Antriebsgelenkpunkt 107" des ersten Getriebes 103' der zweiten Getriebeanordnung 102, wobei beide Antriebsgelenkpunkte 107 mit dem Antriebselement 116 verbunden sind. Ferner ist das Antriebselement 116 mit dem Antriebsgelenkpunkt 107 des zweiten Getriebes 104' der zweiten Getriebeanordnung 102 verbunden.

Ferner ist der Lenker 110" des ersten Getriebes 103' der zweiten Getriebeanordnung 102 um denselben getriebefesten Punkt 111 mit dem Gehäuse 105 verbunden.

Die beiden Abtriebselemente 117, 117' bewegen sich beiden entlang der Querachse Q entgegengesetzt zueinander und weisen jeweils Verbindungsmittel 118 auf, mit denen jedes der Abtriebselemente 117, 117' mit einem Mähmesser verbunden werden kann. Die Verbindungsmittel 118, 118' sind hierbei aus dem Gehäuse 105 herausgeführt. Die Abtriebsgelenkpunkte 108, 108' beider Getriebeanordnungen 101, 102 sind auf einer gemeinsamen Achse, nämlich der Querachse Q, angeordnet.

Das Antriebselement 116 kann auf verschiedene Art und Weise angetrieben werden. Das Antriebselement 116 kann zum Beispiel über einen Kurbeltrieb angetrieben werden, über den eine rotatorische Bewegung in eine geradlinige translatorische Hin- und Herbewegung umgesetzt wird. Denkbar ist auch ein Antrieb gemäß der EP 1 772 051 B1, bei welchem eine Drehbewegung über Planetensitze in eine geradlinige translatorische Bewegung umgesetzt wird. In Figur 2 ist eine weitere Möglichkeit dargestellt, nämlich der Antrieb über eine Kurvenscheibe 119. Die Kurvenscheibe 119 ist um eine Drehachse D im Gehäuse 105 drehend angetrieben. In der Kurvenscheibe 119 ist eine Führungsbahn 120 in Form einer Nut vorgesehen, welche um die Drehachse D verläuft. Die Führungsbahn 120 weist über ihren Umfang um die Drehachse D einen veränderlichen Abstand zur Drehachse D auf. In die Führungsbahn 120 greift ein Mitnehmer 121 ein, der fest mit dem Antriebselement 116 verbunden ist. Der Mitnehmer 121 befindet sich auf der Längsachse L, genauso wie die Drehachse D. Sobald die Kurvenscheibe 119 um die Drehachse D gedreht wird, verändert sich somit der Abstand der Führungsbahn 120 zur Drehachse D in dem Schnittpunkt mit der Längsachse L, so dass das Antriebselement 116 in eine geradlinige translatorische Hin- und Herbewegung überführt wird. Grundsätzlich sind auch andere Gestaltungen der Führungsbahn und des Mitnehmers denkbar. So können z.B. zwei Mitnehmer vorgesehen sein, die sich an gegenüberliegenden Flanken der Führungsbahn abstützen. Ebenso ist es denkbar, dass die Führungsbahn nicht als Nut sondern als Wurst oder dergleichen gestaltet ist, an der sich ein oder mehrere, vorzugsweise zwei, Mitnehmer abstützen. Die Mitnehmer können in allen Fällen in gleitendem oder, in Form von Rollen, in rollendem Kontakt mit der Führungsbahn stehen.

### Bezugszeichenliste

- 10: Getriebe
- 12: Schneidmesser
- 14: Vorgelegewelle
- 16: Kurbeltrieb
- 18: Gehäuse
- 20: Wippe
- 22: Führungskontur
- 24: getriebefester Punkt
- 26: Außenkontur
- 28: Führungspunkt
- 30: Lenker
- 32: Abtriebsgelenkpunkt
- 34: Antriebsgelenkpunkt
- 36: Abtriebselement
- 38: Faltenbalg
- 40: Halterung
- 42: Antriebselement
- 100: Antrieb
- 101: erste Getriebeanordnung
- 102: zweite Getriebeanordnung
- 103: erstes Getriebe
- 104: zweites Getriebe
- 105: Gehäuse
- 106: Wippe
- 107: Antriebsgelenkpunkt
- 108: Abtriebsgelenkpunkt
- 109: Führungspunkt
- 110: Lenker
- 111: getriebefester Punkt
- 112: Außenkontur
- 113: Außenverzahnung
- 114: Führungskontur
- 115: Innenverzahnung
- 116: Antriebselement
- 117: Abtriebselement
- 118: Verbindungsmittel
- 119: Kurvenscheibe
- 120: Führungsbahn
- 121: Mitnehmer

- D: Drehachse
- F: Fahrtrichtung
- L: Längsachse
- Q: Querachse
- R: Radius

## Patentansprüche

1. Antrieb (100) mit zwei identischen Getriebeanordnungen (101, 102) mit jeweils einem ersten Getriebe (103) und einem zweiten Getriebe (104),
wobei jedes der Getriebe (103, 104) zumindest ein Übertragungselement (106) zur Übertragung einer geradlinigen translatorischen Hin- und Herbewegung eines Antriebsgelenkpunktes (107) in einer Antriebsrichtung (L) in eine geradlinige translatorische Hin- und Herbewegung eines Abtriebsgelenkpunktes (108) in einer von der Antriebsrichtung (L) abweichenden Abtriebsrichtung (Q) aufweist,
wobei je Getriebeanordnung (101, 102) ein Abtriebselement (117) vorgesehen ist, das mit den Abtriebsgelenkpunkten (108) beider Getriebe (103, 104) der jeweiligen Getriebeanordnung (101, 102) verbunden ist und diese in einem festen Abstand zueinander koppelt,
wobei ein gemeinsames Antriebselement (116) vorgesehen ist, das mit Antriebsgelenkpunkten (107) von Getrieben (103, 104) beider Getriebeanordnungen (101, 102) verbunden ist und diese in einem festen Abstand zueinander koppelt, und
wobei die Getriebeanordnungen (101, 102) spiegelsymmetrisch zueinander angeordnet sind, so dass die Abtriebselemente (117) der beiden Getriebeanordnungen (101, 102) auf einer gemeinsamen Abtriebsachse (Q) gegenläufig zueinander angetrieben sind,
**dadurch gekennzeichnet,**
**dass** das Antriebselement (116) zum Antreiben der Antriebsgelenkpunkte (107) beider Getriebe (103, 104) jeder Getriebeanordnung (101, 102) vorgesehen ist, wobei das Antriebselement (116) mit den Antriebsgelenkpunkten (107) beider Getriebe (103, 104) jeder Getriebeanordnung (101, 102) verbunden ist und diese in einem festen Abstand zueinander koppelt.

2. Antrieb nach Anspruch 1,
**dadurch gekennzeichnet,**
**dass** der Antriebsgelenkpunkt (107) eines Getriebes (103) einer ersten Getriebeanordnung (101) der genannten zwei Getriebeanordnungen (101, 102) identisch ist mit einem Antriebsgelenkpunkt (107") eines Getriebes (103') einer zweiten Getriebeanordnung (102) der genannten zwei Getriebeanordnungen (101, 102).

3. Antrieb nach einem der vorangehenden Ansprüche,
**dadurch gekennzeichnet,**
**dass** die beiden Getriebeanordnungen (101, 102) in einem gemeinsamen Gehäuse (105) aufgenommen sind.

4. Antrieb nach einem der vorangehenden Ansprüche,
**dadurch gekennzeichnet,**
**dass** das zumindest eine Übertragungselement (106) zumindest eines, vorzugsweise beider, Getriebe (103, 104) derart zwangsgeführt ist, dass die geradlinige translatorische Hin- und Herbewegung des Antriebsgelenkpunktes (107) in der Antriebsrichtung (L) in die geradlinige translatorische Hin- und Herbewegung des Abtriebsgelenkpunktes (108) in der Abtriebsrichtung (Q) umgesetzt wird.

5. Antrieb nach einem der vorangehenden Ansprüche,
**dadurch gekennzeichnet,**
**dass** das Antriebselement (116) mit zumindest einem Mitnehmer (121) verbunden ist, der über eine Kurvenscheibe (119) angetrieben ist.

6. Antrieb nach Anspruch 5,
**dadurch gekennzeichnet,**
**dass** die Kurvenscheibe (119) um eine Drehachse (D) drehend angetrieben ist, dass die Kurvenscheibe (119) eine um die Drehachse (D) verlaufende Führungsbahn (120) aufweist und
**dass** das Antriebselement (116) den Mitnehmer (121) aufweist, der an der Führungsbahn (120) geführt ist.

7. Antrieb nach einem der vorangehenden Ansprüche,
**dadurch gekennzeichnet,**
**dass** zumindest eines, vorzugsweise beide, der Getriebe (103, 104) folgendes aufweist:
eine Wippe (106) als Übertragungselement, die dazu eingerichtet ist, eine begrenzte Wippbewegung auszuführen, wobei die Wippe (106) derart zwangsgeführt ist, dass bei der Wippbewegung ein Führungspunkt (109) der Wippe (106) einen konstanten Abstand (R) von einem getriebefesten Punkt (111) einhält,
wobei die Wippe (106) den Antriebsgelenkpunkt (107) und den Abtriebsgelenkpunkt (108) aufweist.

8. Antrieb nach Anspruch 7,
**dadurch gekennzeichnet,**
**dass** zumindest für eines, vorzugsweise beide, der Getriebe (103, 104) folgendes gilt:
die Wippe (106) ist mittels eines Lenkers (110) zwangsgeführt, wobei der Lenker (110) um den Führungspunkt (109) schwenkbar ist und um eine durch den getriebefesten Punkt (111) verlaufende Schwenkachse schwenkbar ist.

9. Antrieb nach einem der Ansprüche 7 oder 8,
**dadurch gekennzeichnet,**
**dass** zumindest für eines, vorzugsweise beide, der Getriebe (103, 104) folgendes gilt:
die Wippe (106) weist eine kreisabschnittsförmige Außenkontur (112) mit einem Radius auf, wobei das Getriebe (103, 104) weiter eine konkave Führungskontur (114) aufweist, die kreisabschnittsförmig mit einem Radius gestaltet ist, der annähernd doppelt so groß ist wie der Radius der Außenkontur (112) der Wippe (106), und
die Außenkontur (112) steht mit der konkaven Führungskontur (114) in abrollendem Kontakt.

10. Antrieb nach Anspruch 9,
**dadurch gekennzeichnet**,
wobei die Außenkontur (112) der Wippe (106) und die Führungskontur (114) jeweils Verzahnungen (113, 115) aufweisen, die ineinandergreifen.

11. Schneidmesserantrieb mit einem Antrieb (100) nach einem der vorangehenden Ansprüche, wobei das Abtriebselement (117) Verbindungsmittel (118) aufweist, über die das Abtriebselement (117) mit einem Schneidmesser verbindbar ist.

12. Mähwerk einer landwirtschaftlichen Maschine mit einem Antrieb (100) nach einem der Ansprüche 9 bis 11, wobei das Abtriebselement (117) einer ersten Getriebeanordnung (101) der genannten zwei Getriebeanordnungen (101, 102) mit einem ersten Mähmesser verbunden ist und wobei das Abtriebselement (117) einer zweiten Getriebeanordnung (102) der genannten zwei Getriebeanordnungen (101, 102) mit einem zweiten Mähmesser verbunden ist.

## Claims

1. Drive (100) with two identical gearing arrangements (101, 102) having respectively a first gearing (103) and a second gearing (104),
wherein each of the gearings (103, 104) has at least one transmission element (106) for transmitting a linear translatory reciprocating movement of a drive joint point (107) in a driving direction (L) into a linear translatory reciprocating movement of a driven joint point (108) in a driven direction (Q) deviating from the driving direction (L),
wherein for each gearing arrangement (101, 102) a driven element (117) is provided, which is connected to the driven joint points (108) of both gearings (103, 104) of the respective gearing arrangement (101, 102) and couples these at a constant distance to each other,
wherein a common driving element (116) is provided, which is connected to driving joint points (107) of the gearings (103, 104) of both gearing arrangements (101, 102) and couples these at a constant distance to each other, and
wherein the gearing arrangements (101, 102) are arranged mirror-symmetrically to each other, so that the driven elements (117) of both gearing arrangements (101, 102) are driven on a common driven axis (Q) in opposite direction to each other,
**characterised in**
**that** the driving element (116) is provided for driving the driving joint points (107) of both gearings (103, 104) of each gearing arrangement (101, 102), wherein the driving element (116) is connected to the driving joint points (107) of both gearings (103, 104) of each gearing arrangement (101, 102) and couples these at a constant distance to each other.

2. Drive according to claim 1,
**characterised in**
**that** the driving joint point (107) of a gearing (103) of a first gearing arrangement (101) of the said two gearing arrangements (101, 102) is identical to a driving joint point (107") of a gearing (103') of a second gearing arrangement (102) of the said two gearing arrangements (101, 102).

3. Drive according to anyone of the preceding claims,
**characterised in**
**that** the two gearing arrangements (101, 102) are accommodated in a common housing (105).

4. Drive according to anyone of the preceding claims,
**characterised in**
**that** the at least one transmission element (106) of at least one, preferably both gearings (103, 104) is guided in a forced manner such, that the linear translatory reciprocating movement of the driving joint point (107) in the driving direction (L) is transformed into a linear translatory reciprocating movement of the driven joint point (108) in the driven direction (Q).

5. Drive according to anyone of the preceding claims,
**characterised in**
**that** the driving element (116) is connected to at least one driver (121), which is driven via a cam disc (119).

6. Drive according to claim 5,
**characterised in**
**that** the cam disc (119) is rotatably driven around an axis of rotation (D), that the cam disc (119) has a guide track (120) extending around the axis of rotation (D), and
**that** the driving element (116) comprises the driver (121) which is guided on the guide track (120).

7. Drive according to anyone of the preceding claims,
**characterised in**
**that** at least one, preferably both of the gearings (103, 104) has the following:
a rocker (106) as the transmission element, which serves to carry out a limited rocking movement, wherein the rocker (106) is guided in a forced manner such, that during the rocking movement a guide point (109) of the rocker (106) maintains a constant distance (R) from a gearing fixed point (111),
wherein the rocker (106) comprises the driving joint point (107) and the driven joint point (108).

8. Drive according to claim 7,
**characterised in**
**that** at least for one, preferably both of the gearings (103, 104) the following is valid:
the rocker (106) is guided in a forced manner by means of a linking element (110), wherein the linking element (110) is pivotable around the guide point (109) and is pivotable around a pivot axis extending through the gearing fixed point (111).

9. Drive according to anyone of claims 7 or 8,
**characterised in**
**that** at least for one, preferably both of the gearings (103, 104) the following is valid:
the rocker (106) has an outer contour (112) formed like a segment of a circle, having a radius, wherein the gearings (103, 104) have further a concave guide contour (114), which is formed like a segment of a circle with a radius, which his nearly double the size of the radius of the outer contour (112) of the rocker (106), and
the outer contour (112) is in rolling contact to the guide contour (114).

10. Drive according to claim 9,
**characterised in**
**that** the outer contour (112) of the rocker (106) and the guide contour (114) have respectively toothings (113, 115), meshing with each other.

11. Cutting knife drive with a drive (100) according to anyone of the preceding claims, wherein the driven element (117) has connection means (118) by means of which the driven element (117) is connectable to a cutter bar.

12. Mower unit of an agricultural machine with a drive (100) according to one of claims 9 to 11, wherein the driven element (117) of a first gearing arrangement (101) of the named two gearing arrangements (101, 102) is connected to a first mower knife and wherein the driven element (117) of a second gearing arrangement (102) of the named two gearing arrangements (101, 102) is connected to a second mower knife.

## Revendications

1. Entraînement (100) comportant deux dispositifs de transmission identiques (101,102) comprenant respectivement une première transmission (103) et une seconde transmission (104),
chacune des transmissions (103,104) présentant au moins un élément de transmission (106) pour la transmission d'un mouvement en va et vient rectiligne translatoire d'un point d'articulation menant (107) dans un sens menant (L) dans un mouvement en va et vient rectiligne translatoire d'un point d'articulation mené (107) dans un sens mené (Q) différent du sens menant (L),
étant prévu par dispositif de transmission (101,102) un élément mené (117) qui est raccordé au point articulation mené (108) des deux transmissions (103,104) du dispositif de transmission respectif (101,102) et qui couple ceux-ci l'un à l'autre à distance fixe,
étant prévu un élément menant commun (116) qui est raccordé à des points d'articulation menants (103,104) des deux dispositifs de transmission (101,102) et qui couple ceux-ci l'un à l'autre à distance fixe, et
les dispositifs de transmission (101,102) étant disposés en symétrie miroir l'un par rapport à l'autre de sorte que les éléments menés (117) des deux dispositifs de transmission (101,102) sont entraînés en sens inverse l'un par rapport à l'autre sur un axe mené commun (Q),
**caractérisé en ce que**
l'élément menant (116) est prévu pour entraîner les points d'articulation menants (107) des deux transmissions (103,104) de chaque dispositif de transmission (101,102), l'élément menant (116) étant raccordé au point d'articulation menant (107) des deux transmissions (103,104) de chaque dispositif de transmission (101,102) et couplant ceux-ci l'un à l'autre à distance fixe.

2. Entraînement selon la revendication 1,
**caractérisé en ce que**
le point d'articulation menant (107) d'une transmission (103) d'un premier dispositif de transmission (101) parmi les deux dispositifs de transmission cités (101,102) est identique à un point d'articulation menant (107'') d'une transmission (103') d'un second dispositif de transmission (102) parmi les deux dispositifs de transmission cités (101,102) .

3. Entraînement selon une des revendications précédentes,
**caractérisé en ce que**
les deux dispositifs de transmission (101,102) sont reçus dans un boîtier commun (105).

4. Entraînement selon une des revendications précédentes,
**caractérisé en ce**
**qu'**au moins un élément de transmission (106) d'au moins une, de préférence des deux, transmission(s) (103,104), est guidé de force de manière à ce que le mouvement en va et vient rectiligne translatoire du point d'articulation menant (107) dans le sens menant (L) soit transformé en mouvement en va et vient rectiligne translatoire du point d'articulation menée (108) dans le sens mené (Q).

5. Entraînement selon une des revendications précédentes,
**caractérisé en ce que**
l'élément d'entraînement (116) est raccordé à au moins un entraîneur (121) qui est entraîné par un disque à came (119).

6. Entraînement selon la revendication 5,
**caractérisé en ce que**
le disque à came (119) est entraîné en rotation autour d'un axe de rotation (D),
que le disque à came (119) présente une piste de guidage (120) s'étendant autour de l'axe de rotation (D), et
que l'élément menant (116) présente l'entraîneur (121) qui est guidé au niveau de la piste de guidage (120).

7. Entraînement selon une des revendications précédentes, **caractérisé en ce**
**qu'**au moins une, de préférence les deux, commande(s) (103,104) présente ce qui suit :
un basculeur (106) faisant office d'élément de transmission et qui est conçu pour exécuter un mouvement de basculement limité, le basculeur (106) étant guidé de force de manière à ce que, lors du mouvement de basculement, un point de guidage (109) du basculeur (106) respecte une distance constante (R) par rapport à un point fixe au niveau transmission (111), le basculeur (106) présentant le point d'articulation menant (107) et le point d'articulation mené (108).

8. Entraînement selon la revendication 7,
**caractérisé en ce que**,
pour au moins pour une, de préférence les deux, commande(s) (103,104), la règle est la suivante :
le basculeur (106) est guidé de force au moyen d'un volant (110), le volant (110) étant pivotable autour du point de guidage (109) et autour d'un axe de pivotement s'étendant à travers le point fixe du point de vue transmission (111).

9. Entraînement selon une des revendications 7 ou 8, **caractérisé en ce que**,
pour au moins pour une, de préférence les deux, commande(s) (103,104), la règle est la suivante :
le basculeur (106) présente un contour extérieur en forme de section de cercle (112) avec un rayon, la transmission (103,104) présentant en outre un contour de guidage concave (114) qui est équipé en forme de section de cercle d'un rayon qui est approximativement le double du rayon du contour extérieur (112) du basculeur (106), et
le contour extérieur (112) est en contact déroulant avec le contour de guidage concave (114).

10. Entraînement selon la revendication 9,
**caractérisé en ce que**
le contour extérieur (112) du basculeur (106) et le contour de guidage (114) présentent respectivement des dents (113,115) qui s'engrènent les unes dans les autres.

11. Entraînement de lame de coupe comportant un entraînement (100) selon une des revendications précédentes, dans lequel l'élément mené (117) présente des moyens de raccordement (118) par lesquels de ce l'élément mené (117) est raccordable à une lame de coupe.

12. Tondeuse de machine agricole comportant un entraînement (100) selon une des revendications 9 à 11, dans laquelle l'élément mené (117) d'un premier dispositif de transmission (101) parmi les deux dispositifs de transmission cités (101,102) est raccordé à une première lame de tonte et dans lequel l'élément mené (117) d'un second dispositif de transmission (102) parmi les deux dispositifs de transmission cités (101,102) est raccordé à une seconde lame de tonte.
